(19) Europäisches Patentamt / European Patent Office / Office européen des brevets

(11) **EP 3 712 841 B1**

(12) **EUROPEAN PATENT SPECIFICATION**

(45) Date of publication and mention
of the grant of the patent:
**11.08.2021 Bulletin 2021/32**

(21) Application number: **20162542.3**

(22) Date of filing: **11.03.2020**

(51) Int Cl.:
**G06T 5/00** *(2006.01)*   **G06T 5/40** *(2006.01)*
**G06T 5/50** *(2006.01)*

(54) **IMAGE PROCESSING METHOD, IMAGE PROCESSING APPARATUS, AND COMPUTER-READABLE RECORDING MEDIUM**

BILDVERARBEITUNGSVERFAHREN, BILDVERARBEITUNGSVORRICHTUNG UND COMPUTERLESBARES AUFZEICHNUNGSMEDIUM

APPAREIL DE TRAITEMENT D'IMAGES, PROCÉDÉ DE TRAITEMENT D'IMAGES ET SUPPORT D'ENREGISTREMENT LISIBLE SUR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2019 CN 201910219962**

(43) Date of publication of application:
**23.09.2020 Bulletin 2020/39**

(73) Proprietor: **Ricoh Company, Ltd.**
**Tokyo 143-8555 (JP)**

(72) Inventors:
• **SU, Xiaoming**
  **Beijing, 100044 (CN)**
• **LIU, Dianchao**
  **Beijing, 100044 (CN)**
• **WANG, Gang**
  **Beijing, 100044 (CN)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(56) References cited:
**US-A1- 2004 190 789**

• **Anonymous: "Depthmap Plugin - elsamuko", , 23 June 2015 (2015-06-23), XP055717511, Retrieved from the Internet: URL:https://web.archive.org/web/20150623030353/https://sites.google.com/site/elsamuko/gimp/depthmap [retrieved on 2020-07-23]**

**Description**

BACKGROUND OF THE INVENTION

1. Field of the Invention

The present invention relates to a field of image processing. More specifically, the present invention relates to an image processing method, an image processing apparatus, and a computer-readable recording medium.

2. Description of the Related Art

In the field of image processing, a depth map can represent information about a distance to a surface of an object in an image from a viewpoint (e.g., a camera on a vehicle). Since depth maps are used to create per-pixel realistic 3D images, it is now becoming more and more common to generate 3D content with depth maps, as depth maps are further applied to scenes such as autonomous driving, 3D reconstruction, augmented reality, and virtual reality. For example, for an autonomous driving system, accurate depth prediction can efficiently interact with orientation estimation and improve the accuracy of orientation results, and accurate depth estimation for a captured image can facilitate distance measurement and avoidance of obstacles.

However, depth information is often susceptible to external factors such as lighting, environment, and blur, so it is difficult to estimate depth information accurately. For example, in a case of a dark image, the depth information of the image may be inaccurate in depth estimation due to the effect of a bright ray. Therefore, an image processing method, an image processing apparatus, and a computer-readable recording medium that can accurately perform depth estimation is desired.

The internet citation "Depthmap plugin - elsamuko" captured also on the Wayback Machine of the Internet Archive on 23-06-2015 (XP055717511) teaches that depth map generation may fail for overexposed or underexposed images. US 2004/190789 A1 teaches that overexposure and underexposure may be determined by checking image related conditions.

SUMMARY OF THE INVENTION

In order to solve at least the problems associated with the above conventional techniques, the present invention provides an image processing method according to claim 1, an image processing system according to claim 9, and a computer-readable recording medium comprising instructions according to claim 10. Advantageous further embodiments are defined by the dependent claims.

According to the image processing method, the image processing apparatus, and the computer-readable recording medium of the present invention, based on the grayscale histogram, a determination can be made as to whether the acquired image needs to be processed in depth correction, and accurate depth estimation can be performed by outputting the corrected depth map. In addition, the method according to the present invention can correct a depth map that requires depth correction based on determined accurate depth information, and can further improve the efficiency and accuracy of depth estimation.

BRIEF DESCRIPTION OF THE DRAWINGS

The above content, objects, features, and advantages of the present application will become apparent in more detail from the following description about embodiments and drawings illustrating the present invention which is defined by the appended claims. It should be understood that the attached drawings are used to further explain the embodiments disclosed in the present application, and it should be understood that the drawings are not intended to determine the scope of the present invention by interpreting the present application with drawings and the embodiments of the present application. Instead, the scope of the invention is defined by the appended claims.

FIG. 1 is a flowchart of an image processing method according to an embodiment of the present invention;
FIG. 2 is a drawing illustrating a grayscale histogram according to an embodiment of the present invention;
FIG. 3A and FIG. 3B are two exemplary drawings each illustrating an original image and a corresponding depth map according to an embodiment of the present invention;
FIG. 4 is a drawing illustrating an original image and a corresponding grayscale histogram according to an embodiment of the present invention;
FIG. 5 is a flowchart illustrating depth map correction processing according to an embodiment of the present invention;
FIG. 6 is a drawing illustrating an example of classifying an image into different categories by using SegNet;

FIG. 7 is a drawing illustrating an original image and a corrected depth map according to an embodiment of the present invention;

FIG. 8 is a block diagram illustrating an image processing apparatus according to an embodiment of the present invention; and

FIG. 9 is a block diagram illustrating an image processing apparatus according to an embodiment of the present invention.

DESCRIPTION OF THE EMBODIMENTS

Hereinafter, an image processing method, an image processing apparatus, and a computer-readable recording medium according to an embodiment of the present invention will be explained with reference to drawings. In the drawings, similar numbers denote similar constituent elements. It is to be understood that the embodiments described herein are used for illustration purpose only and do not determine the scope of the present invention which is defined by the appended claims.

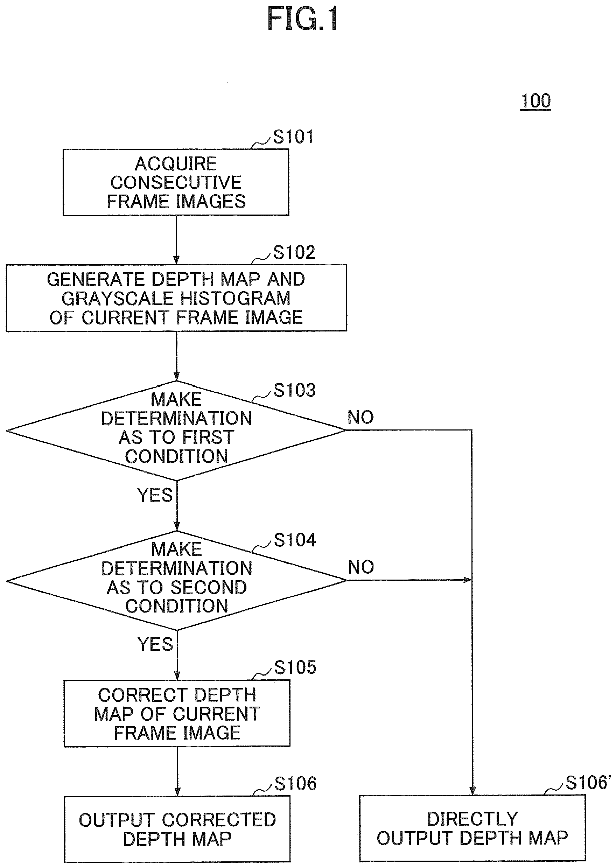

An image processing method according to an embodiment of the present invention can be applied to a series of consecutive static images, and can also be applied to video frames in a video that changes over time. The application of the image processing method is not limited here. Hereinafter, the image processing method according to the embodiment of the present invention will be explained with reference to FIG. 1. FIG. 1 illustrates a flowchart of an image processing method 100. As illustrated in FIG. 1, the image processing method 100 can include the following steps.

In step S101, consecutive frame images are acquired. According to an embodiment of the present invention, the acquiring of consecutive frame images may be as follows, but is not limited thereto. Consecutive frame images may be received via a wire or wirelessly. Alternatively, the acquiring of consecutive frame images may be as follows. Consecutive frame images stored in a memory in advance may be acquired, or consecutive frame images captured by an image capture apparatus such as a camera may be acquired. Here, the consecutive frame images may be original images captured by an image capture apparatus, and the original image may be a monochrome, grayscale, or color image, or may be an image acquired by processing various kinds of preprocessing on an original image. Here, the preprocessing may be as follows, but is not limited thereto. For example, the preprocessing may be cropping, scaling, deformation, noise reduction, or the like.

Thereafter, step S102 is performed.

In step S102, a depth map and a grayscale histogram of the current frame image of the consecutive frame images are generated.

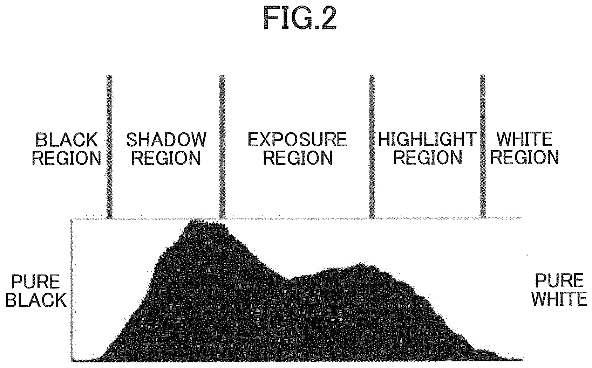

First, the grayscale histogram according to an embodiment of the present invention will be explained with reference to FIG. 2. As is known, the grayscale histogram is a function of an image grayscale distribution, and is a statistical diagram about a grayscale value distribution in the image. Therefore, the grayscale histogram can represent the number of grayscale pixels in the image to reflect the frequency of occurrence of the grayscale pixels in the image, and can intuitively display, with respect to the image, a proportion of each grayscale pixel occupying the image.

As illustrated in FIG. 2, according to an embodiment of the present invention, in the grayscale histogram, the number of pixels for each grayscale value is calculated according to the magnitudes of the grayscale values for all the pixels in the acquired image. Here, the horizontal axis represents grayscale values of pixels, and the vertical axis represents the number of pixels for each grayscale value. According to an embodiment of the present invention, the grayscale value can be divided into a total of 256 values from 0 to 255. Here, a grayscale value "0" represents the darkest area of pure black. A grayscale value "255" represents the brightest area of pure white. Intermediate grayscale values represent grays of different levels of luminance. Further as illustrated in FIG. 2, the grayscale histogram can be classified into five regions: a black region, a shadow region, an exposure region, a highlight region, and a white region. Among them, pixels in an exposure region located in the middle of the horizontal axis are pixels in which the levels of the grayscale are adequate in the image. Therefore, the exposure region is usually rich in the image gradations. Furthermore, a large amount of useful image information and details can all be represented in an exposure region having moderate luminance. In contrast, the black region (the darkest region) at the left end and the white region (the brightest region) at the right end of the horizontal axis usually do not have any details. Therefore, the grayscale histogram of an image can reflect the overall degree of brightness and darkness of the image.

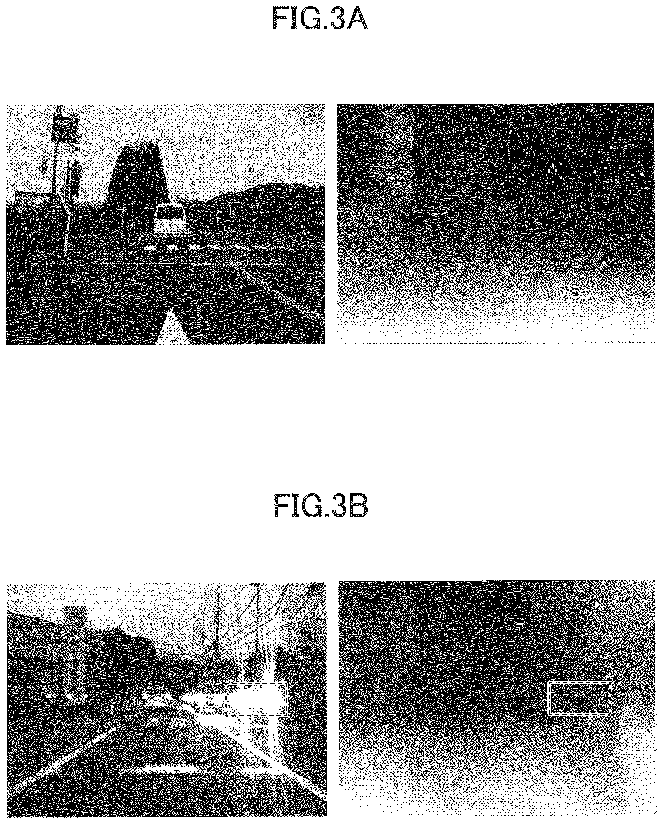

Subsequently, an image and a depth map of the image according to an embodiment of the present invention will be explained with reference to FIG. 3A and FIG. 3B. As described above, the depth map includes depth information about each pixel in an image, and the depth information can represent information about a distance between a viewpoint and a target surface in the image. More specifically, the depth map is not limited to a 2D image in which each pixel corresponds to a 2D pixel in a coordinate system (i.e., a pixel is located at a position on an X-Y plane), and a 3D image can be structured in a 3D per-pixel manner by defining a position of a pixel in the Z axis with depth information. More specifically, for example, in the field of autonomous driving, a series of frame images can be acquired from a vehicle camera in real time, and depth information of the images can indicate a distance between a target surface in an image and a camera or an imaging plane.

According to an embodiment of the present invention, as illustrated in the depth maps at the right-hand side in FIG. 3A and FIG. 3B, the depth map can be a grayscale image constituted by grayscale pixels in which grayscale values of the pixels can be defined by values of 0 to 255. For example, when the grayscale pixel has a value closer to "0", the pixel is closer to black, which indicates that the pixel is located far away from the viewpoint in the scene. On the contrary, when the grayscale pixel has a value almost close to "255", the pixel is close to white, which indicates that the pixel is located close to the viewpoint in the scene. In other words, the smaller the grayscale value of the pixel is, the farther the pixel is located from the viewpoint, and the larger the grayscale value of the pixel is, the closer the pixel is located to the viewpoint. It is to be naturally understood that various kinds of preprocessing such as "color inversion" processing can be performed on the depth map, or, by previously making a setting on the basis of an application scene, a camera parameter, and the like, the value of the grayscale pixel of each pixel and depth information indicating a distance may be applied to other correlations, but the embodiment is not limited thereto.

For example, an original image at the left-hand side in FIG. 3A is an image taken under a normal light environment. In a depth map at the right-hand side corresponding to the original image, distance information about each target (for example, a vehicle, a tree, and a mountain in the distance) in an image is represented by a grayscale of a pixel, so that a realistic 3D model and a 3D image can be generated with the distance information. However, in some cases, the original image may be captured, for example, in a dark environment (e.g., at night, in a tunnel, and the like), or the entire image may be dark due to lack of exposure, and such images may include a pixel of high luminance (e.g., a light source, a reflection phenomenon, or the like). In this case, the generation of a portion (for example, a portion corresponding to a high-luminance region) of a depth map or the entire depth map is adversely affected.

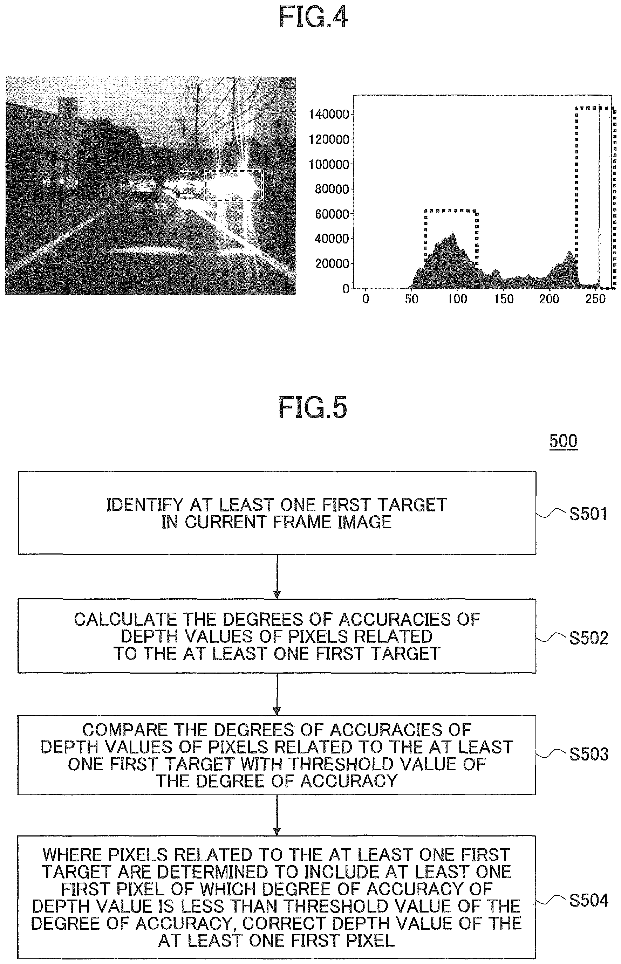

For example, an original image at the left-hand side in FIG. 3B is an image taken under a night environment, and the image as a whole is dark. However, there are strong headlights in the region indicated by a dashed frame at the right-hand side. Therefore, in the depth map (i.e., a graph at the right-hand side in FIG. 4) of the original image, depth pixels related to a vehicle are not accurately generated in the corresponding region indicated by a dashed frame at the right-hand side in the depth map due to the strong headlights, and in addition, the depth values of image edges are not uniform, and it can be seen that the generated depth map is inaccurate. The embodiment of the present invention will be hereinafter described in detail with regard to processing for such an inaccurate depth map.

In addition, the present invention does not limit the manner of generating the above-mentioned depth map and grayscale histogram, and any suitable method or a software and/or hardware module may be used to generate a depth map and a grayscale histogram of the current frame image in the acquired consecutive frame images. For example, according to an embodiment of the present invention, a grayscale histogram can be acquired using traditional statistical mathematical methods, or a depth map and/or a grayscale histogram of the current frame image can be generated based on any trained deep neural network, so that a more reliable depth map and/or a grayscale histogram is generated in order to make subsequent image processing more accurate.

Thereafter, step S103 is performed.

In step S103, a determination is made as to whether the grayscale histogram generated in step S102 satisfies a first condition. In a case where the generated grayscale histogram satisfies the first condition, step S104 is subsequently performed to determine whether the grayscale histogram satisfies a second condition. In a case where the generated grayscale histogram does not satisfy the first condition, step S106' is subsequently performed to output a depth map of the current frame image as it is. It should be understood that the depth map that is output in step S106 may be saved for subsequent correction processing.

More specifically, according to an embodiment of the present invention, the first condition may be that a representative grayscale value of the generated grayscale histogram is smaller than a first threshold value. That is, in step S103, a determination is made as to whether a representative grayscale value of the grayscale histogram of the current frame image is smaller than the first threshold value. Generally, in a grayscale histogram corresponding to a dark image, a peak is formed in a low grayscale section. This is because there are a large number of pixels with low grayscale values in such a dark image. For this reason, such a dark image usually appears to be relatively dark as a whole.

FIG. 4 is a drawing illustrating an original image and a corresponding grayscale histogram according to an embodiment of the present invention. For example, in an original image at the left-hand side in FIG. 4, the picture as a whole is dark, and in a grayscale histogram at the right-hand side in FIG. 4, a peak is formed in a grayscale section from about 60 to 130. It can be understood that in other cases, for example, when the captured image is underexposed, the image as a whole may be relatively dark, and its grayscale histogram forms a peak in a lower grayscale section. Therefore, it can be seen that by determining whether the image is a dark image as a whole by determining whether the representative grayscale value of the grayscale histogram satisfies the first condition, a determination can be made as to whether the depth map of the current frame image is desired to be processed in subsequent processing.

More specifically, according to an embodiment of the present invention, the representative grayscale value of the generated grayscale histogram can be determined by the average value of the grayscale values of all the pixels in the grayscale histogram or pixels in a particular section. In a case where the average value of the grayscale value is less than a predetermined grayscale value (i.e., a first threshold value such as, e.g., 100), it is determined that the first condition is satisfied. Alternatively, according to an embodiment of the present invention, the representative grayscale value of the grayscale histogram can also be evaluated by counting the number of pixels in a particular section. For example, the number of pixels can be counted in a low grayscale section (for example, a grayscale section from 60 to 130), and in a case where the counted number of pixels exceeds a predetermined number, or in a case where a ratio of the counted number of pixels to the total number of pixels exceeds a predetermined value, the number of pixels in the grayscale section may be determined to satisfy the first condition. It should be understood that any suitable method may be used to determine the first condition, and the present invention is not limited thereto.

As described above, the processing of determining whether the generated grayscale histogram satisfies the first condition at step S103 is described above. Hereinafter, processing for proceeding to step S104 in a case where the first condition is satisfied will be explained. More specifically, as described above, according to an embodiment of the present invention, in a case where it is determined that the image is a dark image as a whole based on the generated grayscale histogram of the current frame image, the depth map of the current frame image may be affected by strong light or other external factors, and it is necessary to further determine whether or not the image is to be corrected, and therefore, step S104 is subsequently performed.

In step S104, it is determined whether the generated grayscale histogram satisfies a second condition. In a case where the generated grayscale histogram satisfies the second condition, step S105 is subsequently performed to correct the depth of the current frame image. In a case where the generated grayscale histogram does not satisfy the second condition, step S106' is subsequently performed to output the depth map of the current frame image as it is. It should be understood that the depth map that is output in step S106 may be saved for subsequent correction processing.

According to an embodiment of the present invention, the second condition is that, in a grayscale section, of the generated grayscale histogram, in which the grayscale value is more than a second threshold value, the difference in the number of pixels for adjacent grayscale values is more than a third threshold value. That is, in step S104, a determination is made as to whether there is a peak exceeding a threshold value within a particular section of the grayscale histogram of the current frame image.

More specifically, in a dark image as a whole, the depth information of the image will be affected by bright light sources (such as, e.g., headlights of cars, street lights, and natural light), resulting in inaccurate depth estimation, and these light sources in the image appear in the grayscale histogram as a peak at a grayscale value of about 255. For example, in FIG. 4, the original image at the left-hand side in FIG. 4 is a road image taken at night, which is dark as a whole, but there are strong (high luminance) headlights in the region indicated by a dashed frame at the right-hand side in the grayscale histogram (at the right-hand side in FIG. 4) corresponding to the image. In this case, a very high peak (indicated by the dashed frame) appears at the grayscale value of about 255 in the grayscale histogram (at the right-hand side in FIG. 4) corresponding to the image. This is because the light appears in the grayscale image as gray pixels with very high grayscale values, and the stronger the light is, the more greatly the number of pixels at the grayscale value of about 255 increases, and accordingly, a very high peak is formed at the grayscale value of about 255 in the corresponding grayscale histogram, and as illustrated in FIG. 4, it can be understood that there are more than about 140,000 pixels for a grayscale value of about 255 in the image. It can be understood that in other cases, the light source may be weak, and the position where the peak appears in the grayscale histogram will be lower than 255, but still at a relatively high grayscale value. Therefore, depending on the specific application scenario, equipment parameters, and accuracy requirements, the second threshold value and the third threshold value can be set as required. For example, in a case where the overall environment is very dark, the luminance of the image as a whole is low, and the image depth may be more susceptible to the adverse effects of high-luminance light. Therefore, the third threshold value can be set to 50,000, and in other cases, the third threshold can be set to 100,000 or higher in order to select depth maps of images that certainly need to be corrected.

Therefore, by determining whether the grayscale histogram satisfies the second condition, a determination can be made as to whether a high-luminance target exists in the dark image, and further, a determination can be made as to whether the depth map of the current frame image needs to be further processed or not.

In addition, in a grayscale histogram of an image that is dark as a whole, a cliff-like shape (i.e., the number of pixels of a grayscale value drops sharply from the number of pixels of an adjacent grayscale value) is usually formed in a high luminance region. In a case where there is a target of a relatively high luminance (e.g., a light source, a reflection phenomenon, or the like) in the dark image, an extremely high peak appears in the grayscale section in which the cliff is formed. For example, in the grayscale histogram at the right-hand side corresponding to the original image at the left-hand side in FIG. 4, a cliff-like shape is formed at about a grayscale value of about 250, and due to the presence of headlights in the original image, a peak is formed in a grayscale section located to the right of the grayscale value of 250. Therefore, through the above characteristics of the grayscale histogram, a grayscale range where a peak corresponding to a high-luminance target in a dark image appears can be more accurately located, and the degree of accuracy of image processing according to an embodiment of the present invention can be further improved.

Hereinabove, the processing for determining whether the generated grayscale histogram satisfies the second condition in step S104 has been explained. Hereinafter, processing for proceeding to step S105 in a case where the second condition is satisfied will be explained. More specifically, as described above, according to an embodiment of the present invention, in a case where it is determined that there is a high-luminance target in the dark image based on the generated grayscale histogram of the current frame image, the depth map of the current frame image may be affected adversely, and it is necessary to correct the depth map of the current frame image, and therefore, step S105 is subsequently performed.

In step S105, the depth map of the current frame image is corrected. Hereinafter, specific processing of depth map correction according to an embodiment of the present invention will be explained with reference to FIG. 5.

FIG. 5 is a flowchart illustrating depth map correction processing according to an embodiment of the present invention. As illustrated in FIG. 5, depth map correction processing 500 may include the following steps.

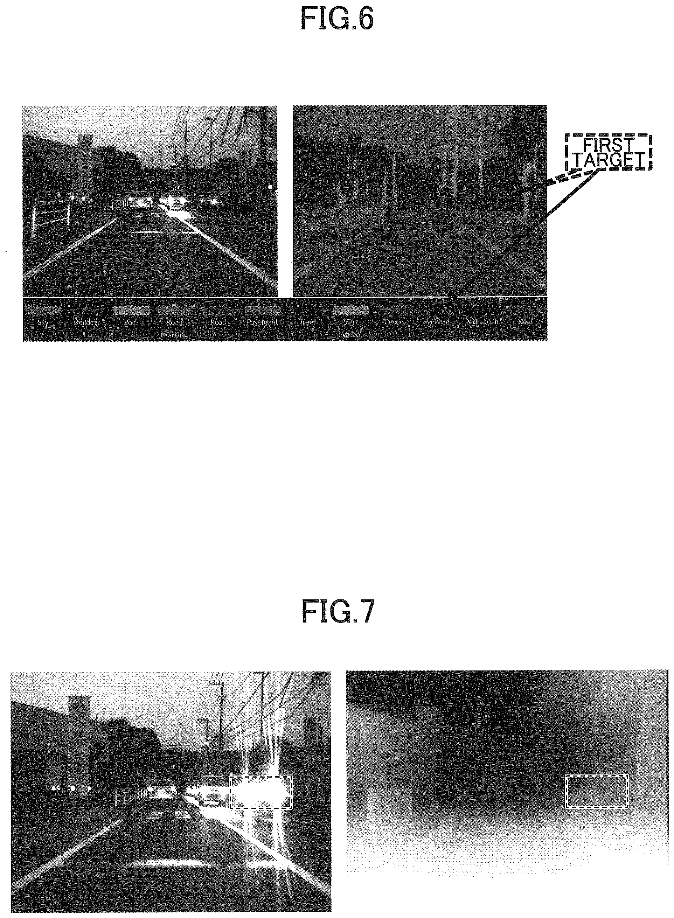

In step S501, a first target in a current frame image is identified. According to an embodiment of the present invention, the image recognition can be implemented based on a trained deep neural network. For example, an algorithm such as Mask-RCNN and SegNet is used to classify the current frame image into different categories to identify the first target of interest in the current frame image. Preferably, as illustrated in FIG. 6, the first target of interest is a dynamic target in an image, such as a vehicle.

FIG. 6 is a drawing illustrating an example of classifying an image into different categories by using SegNet. As illustrated in FIG. 6, the vehicle can be identified as at least one first target. It can be understood that, during this processing, image information such as a contour, a position, and a depth of the target can be acquired. The specific processing for acquiring such image information is well known to those skilled in the art, and will not be repeated here. It should be understood that the present invention is not limited by the specific identification method to be used, and both existing identification methods and identification methods developed in the future can be applied to the method according to the embodiment of the present invention. Thereafter, step S502 is subsequently performed.

In step S502, the degree of accuracy of a depth value of a pixel associated with the first target is calculated. The degree of accuracy is used to evaluate whether the depth value of the corresponding pixel is reliable. More specifically, the smaller the degree of accuracy is, the more inaccurate the depth value of the pixel at the point is. Conversely, the larger the degree of accuracy is, the more accurate the depth value of the pixel at the point is. Thereafter, step S503 is subsequently performed. In step S503, the degree of accuracy of the depth value of the pixel associated with the first object is compared with a threshold value of the degree of accuracy.

According to an embodiment of the present invention, the calculating of the degree of accuracy of the depth value of the pixel related to the first target includes determining a second target corresponding to the first target in a previous frame image and calculating, as the degree of accuracy of the depth value of the pixel related to the first target, a difference between the depth value of the pixel related to the first target and a depth value of the pixel related to the second target. The previous frame image may be one or more frames before the current frame image, with respect to consecutive frame images. Because a series of image frames are in a consecutive order and the interval between each frame is short, at least one first target in the current frame image appears in a consecutive order. In other words, it appears as a second target in a previous frame image. Therefore, the second target and the first target correspond to each other, and pixels in the second target and pixels in the first target also correspond to each other in one-to-one relationship, and this correspondence can be determined by a method such as a feature point matching. On this basis, the depth values of pixels related to the at least one first target and the second target corresponding to the first target are obtained, and a difference between the depth value of the pixel related to the first target and the depth value of the corresponding pixel related to the second target is successively calculated as the degree of accuracy of the depth value of the pixel related to the first target. More specifically, this can be expressed by the following expression.

$$A_i = \frac{1}{\left| D_i - D_{i'} \right|}, \quad i = 1,2,3 \ldots, \quad i' = 1,2,3 \ldots$$

Here, $i$ denotes an index of a particular pixel related to the first target, and $i'$ denotes an index of a corresponding pixel related to the second target. $A_i$ denotes the degree of accuracy of the depth of the particular pixel $i$ related to the first target. $D_i$ denotes the depth value of the particular pixel $i$ related to the first target. $D_{i'}$ denotes the depth value of the corresponding pixel $i'$ related to the second target. Herein, the first target and the second target correspond to each other, and the pixel $i$ and the pixel $i'$ correspond to each other in a one-to-one relationship.

In step S504, in a case where pixels related to the first target are determined to include at least one first pixel of which the degree of accuracy of the depth value is less than a threshold value of the degree of accuracy, the depth value of the first pixel is corrected.

According to an embodiment of the present invention, the correcting of the depth value of the first pixel may include correcting the depth value of at least one pixel (i.e., the first pixel) of which the degree of accuracy is less than the threshold value of the degree of accuracy, on the basis of the depth value of at least one pixel in the first target of which the degree of accuracy is not less than the threshold value of the degree of accuracy. More specifically, since it can be considered thdistants between the view point and the pixels of the same target in the current frame image are similar, the depth value of the pixel of which the degree of accuracy is not less than the threshold value of the degree of accuracy is substituted for the depth value of the first pixel in the first target of the current frame image, and the at least one pixel (i.e., the first pixel) of which the degree of accuracy is less than the threshold value of the degree of accuracy is updated. Therefore, the overall depth estimation of the first target can be corrected. Alternatively, an average value of depth values of such substitute pixels (i.e., pixels of which the degrees of accuracy are not less than the threshold value of the degree of accuracy) may be derived, and the depth value of the first pixel may be updated with the averaged depth value to achieve depth correction. Furthermore, each substitute depth value of the pixel can be weighted on the basis of the similarity between the substitute pixel and the pixel to be corrected (i.e., a Euclidean distance between pixels), and an average value of substitute depth values of the pixels weighted based on the similarity may be calculated to be used for updating the depth value of the first pixel.

Sometimes, all the depth values in the first target of the current frame image may be undesirable. In such a case, it may be conceivable to correct the depth map of the current frame image with the depth value of the corresponding target in the previous frame image. Alternatively, according to another embodiment of the present invention, a series of acquired image frames is in a consecutive order and the interval between frames is short, and according to the image processing method of an embodiment of the present invention, the depth map of the previous frame image does not need to be corrected, or the depth has already been corrected, and therefore, correction is preferably made with the depth value of the pixel corresponding to the previous frame image. More specifically, in a case where pixels of the first target corresponding to the current frame image do not include any pixel of which the degree of accuracy of the depth value is equal to or more than (i.e., not less than) the threshold value of the degree of accuracy, the depth value of a pixel (i.e., a first pixel) of which the degree of accuracy is less than the threshold value of the degree of accuracy can be corrected on the basis of the depth value of the pixel corresponding to the second target in the previous frame image, or regardless of the degrees of accuracy of pixels of the first target in the current frame image, the depth value of a pixel (i.e., a first pixel) of which the degree of accuracy is less than the threshold value of the degree of accuracy can be corrected on the basis of the depth value of the pixel corresponding to the second target in the previous frame image.

In addition, in some cases, the luminance of light that affects the depth in the image is gradually increasing. For example, when a vehicle comes closer from the distance, the illumination range becomes larger. When the vehicle is still distant, the image as a whole is dark. Even if there are some weak lights in the image, their influence on the depth map of the image may be acceptable without correction, and considering that the depths of the same object in two adjacent frames are the closest in most cases, it may be more desirable to save the depth map of such an image and use the depth map to correct depth maps of subsequent images that need to be corrected in consecutive frame images.

More specifically, according to another embodiment of the present invention, a determination can be made as to whether the grayscale histogram satisfies the third condition after the second condition is determined to be satisfied in step S104, and the third condition is that a peak value exceeding a fourth threshold value is present in a particular section of the grayscale histogram of the current frame image, and the fourth threshold value is more than the third threshold value. When this third condition is satisfied, it means that the depth map of the current frame image will be significantly adversely affected by light, and the like. In this case, step S105 is subsequently performed to correct the depth map of the current frame image, and the corrected depth map is output in step S106. In a case where the third condition is not satisfied, the depth map of the current frame image is considered to be acceptable, and in this case, step S106 is subsequently performed to output the depth map of the current frame image.

For example, according to an embodiment of the present invention, the third threshold value can be 50000, and the fourth threshold value can be 100000. In a more specific example, in a previous frame of two consecutive images, the headlights in the distance are weak, which corresponds to only 40000 pixels at the grayscale value "255" in the grayscale histogram of the image. At this time, the depth estimation of the image has not been greatly adversely affected, and the accuracy of the depth map is acceptable. In the next frame of the two consecutive images, the vehicle comes closer, the headlights are strong and the illumination range becomes larger, which corresponds to more than 100000 pixels at the grayscale value "255" in the grayscale histogram of the image (in the case of FIG. 4). At this time, the depth map of the image needs to be corrected.

Back to step S105, when the depth map of the current frame image is corrected, step S106 is subsequently performed to output the corrected depth map.

In summary, according to the flowchart illustrated in FIG. 1, firstly, consecutive frame images are acquired in step S101, and a grayscale histogram is generated in step S102. In a case where the generated grayscale histogram is determined not to satisfy the first condition or the second condition in step S103 or step S104, the depth map of the current frame image is directly output in step S106'. In this case, the depth map to be output is a depth map that does not need to be corrected. In a case where the grayscale histogram generated in step S102 is determined to satisfy the first condition and the second condition in step S103 and step S104, the depth map of the current frame image is corrected in step S105, and the corrected depth map is output in step S106. In this case, the depth map to be output is a depth map that has been corrected. It should be understood that the depth map to be output in steps S106 and S106' may be saved, and the output depth maps include a directly output depth map and a corrected depth map so as to allow correction of depth maps in subsequent frame images of the consecutive frame images.

FIG. 7 is a drawing illustrating an original image and a corrected depth map according to an embodiment of the present invention. As illustrated in FIG. 7, the original image at the left-hand side of FIG. 7 is the same as the original image at the left-hand side of FIG. 3B, and as described above, as can be understood from the depth map at the right-hand side of FIG. 3B, depth pixels related to the vehicle are not accurately generated in the corresponding region indicated by the dashed frame at the right-hand side of the depth map. In contrast, after the depth map is corrected by the above-mentioned image processing method proposed by the present invention, as illustrated in the depth map at the right-hand side of FIG. 7, the contour of the vehicle is effectively restored, and depths at edges of the image are uniform, and the accuracy of the depth map of the image is significantly improved by correction.

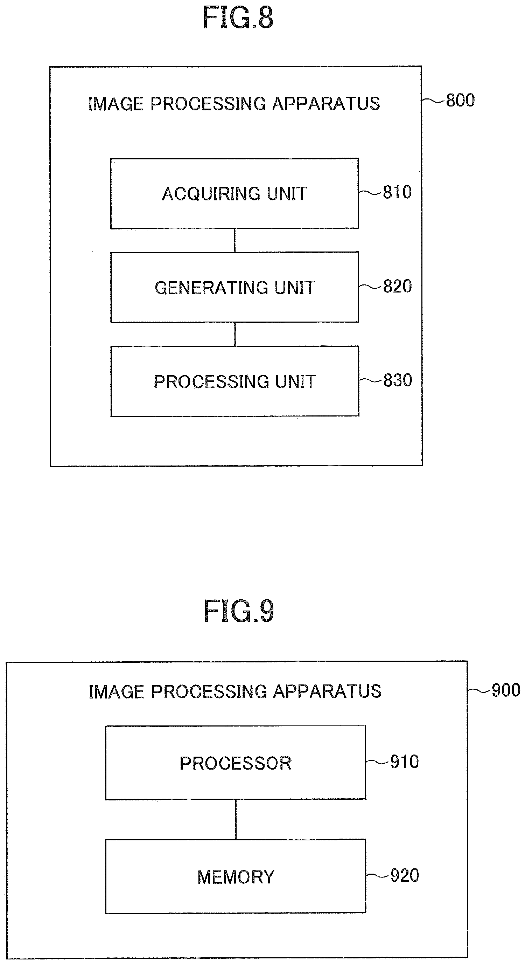

Hereinafter, an image processing apparatus 800 according to an embodiment of the present invention will be explained with reference to FIG. 8. FIG. 8 is a block diagram illustrating the image processing apparatus 800 according to the embodiment of the present invention. As illustrated in FIG. 8, the image processing apparatus 800 may include an acquiring unit 810, a generating unit 820, and a processing unit 830. It should be understood that the image processing apparatus 800 may include other constituent elements in addition to the above-mentioned units. However, since these constituent elements are not related to the content of the embodiment of the present invention, the illustration and description about these constituent elements are omitted here. In addition, since the specific details of the following operations performed by the image processing apparatus 800 according to the embodiment of the present invention are the same as those described above with reference to FIGS. 1 to 7, repeated descriptions about the same details are omitted here to avoid repetition.

The acquiring unit 810 is configured to obtain consecutive frame images. According to an embodiment of the present invention, the acquiring unit 810 may be an image acquiring device such as a camera, a video camera, or the like. In addition, the acquiring unit 810 may be physically separated from other constituent elements in the image processing apparatus 800, and an image acquired by the acquiring unit 810 can be transmitted to other constituent elements in the image processing apparatus 800 via a wire or wirelessly. Alternatively, the acquiring unit 810 may be physically located at the same location as other constituent elements in the image processing apparatus 800 or may be integrated with other constituent elements, and other constituent elements in the image processing apparatus 800 can receive an image acquired by the acquiring unit 810 via an internal bus. The specific processing performed by the acquiring unit 810 is similar to the corresponding content of step S101 described above.

The generating unit 820 is configured to generate a depth map and a grayscale histogram of the current frame image of the consecutive frame images. The specific processing performed by the generating unit 820 is similar to the corresponding content of step S102 described above.

In addition, the present invention does not limit the manner in which the generating unit 820 generates the above-mentioned depth map and grayscale histogram, and any suitable manner or software and/or hardware module may be used as the generating unit 820 to generate the depth map and the grayscale histogram of the current frame image of the acquired consecutive frame images. For example, according to an embodiment of the present invention, the generating unit 820 may generate a depth map and/or a grayscale histogram of the current frame image on the basis of any trained deep neural network, so that a more reliable depth map and/or a grayscale histogram is generated in order to make subsequent image processing more accurate.

The processing unit 830 is configured to, in a case where the generated grayscale histogram does not satisfy the first condition, output a depth map of the current frame image, and in a case where the generated grayscale histogram satisfies the first condition, determine whether the generated grayscale histogram satisfies the second condition. In a case where the second condition is not satisfied, the depth map of the current frame image is output, and in a case where the second condition is satisfied, the depth map of the current frame image is corrected, and the corrected depth map of the current frame image is output. The specific processing performed by the processing unit 830 is similar to the corresponding content of steps S103 to S106 described above.

First, the processing unit 830 determines whether the generated grayscale histogram satisfies the first condition, and in a case where the generated grayscale histogram satisfies the first condition, the processing unit 830 continues to determine whether the grayscale histogram satisfies the second condition. In a case where the generated grayscale histogram does not satisfy the first condition, the processing unit 830 directly outputs the depth map of the current frame image. It should be understood that the depth map output by the processing unit 830 may be saved for subsequent correction processing.

More specifically, according to an embodiment of the present invention, the first condition may be that a representative grayscale value of the generated grayscale histogram is smaller than a first threshold value. That is, the processing unit 830 determines whether a representative grayscale value of the grayscale histogram of the current frame image is smaller than the first threshold value. Generally, in a grayscale histogram corresponding to a dark image, a peak is formed in a low grayscale section. This is because there are a large number of pixels with low grayscale values in such a dark image. For this reason, such a dark image usually appears to be relatively dark as a whole.

More specifically, according to an embodiment of the present invention, with the average value of the grayscale values of all the pixels in the grayscale histogram or pixels in a particular section, the processing unit 830 can determine the representative grayscale value of the grayscale histogram generated by the processing unit 830. In a case where the average value of the grayscale value is less than a predetermined grayscale value (i.e., a first threshold value such as, e.g., 100), the processing unit 830 determines that the first condition is satisfied. Alternatively, according to an embodiment of the present invention, the processing unit 830 can also evaluate the representative grayscale value of the grayscale histogram by counting the number of pixels in a particular section. For example, the processing unit 830 can count the number of pixels in a low grayscale section (for example, a grayscale section from 60 to 130), and in a case where the counted number of pixels exceeds a predetermined number, or in a case where a ratio of the counted number of pixels to the total number of pixels exceeds a predetermined value, the processing unit 830 may determine that the number of pixels in the grayscale section satisfies the first condition. It should be understood that the processing unit 830 may use any suitable method to determine the first condition, and the present invention is not limited thereto.

As described above, in a case where the processing unit 830 determines that the image is a dark image as a whole based on the generated grayscale histogram of the current frame image, the depth map of the current frame image may be affected by strong light or other external factors, and it is necessary for the processing unit 830 to further determine whether or not the image is to be corrected.

Subsequently, the processing unit 830 determines whether the generated grayscale histogram satisfies a second condition. In a case where the generated grayscale histogram satisfies the second condition, the processing unit 830 corrects the depth of the current frame image. In a case where the generated grayscale histogram does not satisfy the second condition, the processing unit 830 outputs the depth map of the current frame image as it is. It should be understood that the depth map that is output by the processing unit 830 may be saved for subsequent correction processing.

According to an embodiment of the present invention, the second condition is that, in a grayscale section, of the generated grayscale histogram, in which the grayscale value is more than a second threshold value, the difference in the number of pixels for adjacent grayscale values is more than a third threshold value. That is, the processing unit 830 determines whether there is a peak exceeding a threshold value within a particular section of the grayscale histogram of the current frame image.

More specifically, in a dark image as a whole, the depth information of the image will be affected by bright light sources (such as, e.g., headlights of cars, street lights, and natural light), resulting in inaccurate depth estimation, and these light sources in the image appear in the grayscale histogram as a peak at a grayscale value of about 255. For example, in FIG. 4, the original image at the left-hand side in FIG. 4 is a road image taken at night, which is dark as a whole, but there are strong (high luminance) headlights in the region indicated by a dashed frame at the right-hand side in the grayscale histogram (at the right-hand side in FIG. 4) corresponding to the image. In this case, a very high peak (indicated by the dashed frame) appears at the grayscale value of about 255 in the grayscale histogram (at the right-hand side in FIG. 4) corresponding to the image. This is because the light appears in the grayscale image as gray pixels with very high grayscale values, and the stronger the light is, the more greatly the number of pixels at the grayscale value of about 255 increases, and accordingly, a very high peak is formed at the grayscale value of about 255 in the corresponding grayscale histogram, and as illustrated in FIG. 4, it can be understood that there are more than about 140,000 pixels for a grayscale value of about 255 in the image. It can be understood that in other cases, the light source may be weak, and the position where the peak appears in the grayscale histogram will be lower than 255, but still at a relatively high grayscale value. Therefore, depending on the specific application scenario, equipment parameters, and accuracy requirements, the second threshold value and the third threshold value can be set as required. For example, in a case where the overall environment is very dark, the luminance of the image as a whole is low, and the image depth may be more susceptible to the adverse effects of high-luminance light. Therefore, the third threshold value can be set to 50,000, and in other cases, the third threshold can be set to 100,000 or higher in order to select depth maps of images that certainly need to be corrected.

Therefore, by determining whether the grayscale histogram satisfies the second condition, the processing unit 830 can determine whether a high-luminance target exists in the dark image, and further, determine whether the depth map of the current frame image needs to be further processed or not.

In addition, in a grayscale histogram of an image that is dark as a whole, a cliff-like shape (i.e., the number of pixels of a grayscale value drops sharply from the number of pixels of an adjacent grayscale value) is usually formed in a high luminance region. In a case where there is a target of a relatively high luminance (e.g., a light source, a reflection phenomenon, or the like) in the dark image, an extremely high peak appears in the grayscale section in which the cliff is formed. For example, in the grayscale histogram at the right-hand side corresponding to the original image at the left-hand side in FIG. 4, a cliff-like shape is formed at about a grayscale value of about 250, and due to the presence of headlights in the original image, a peak is formed in a grayscale section located to the right of the grayscale value of 250. Therefore, through the above characteristics of the grayscale histogram, a grayscale range where a peak corresponding to a high-luminance target in a dark image appears can be more accurately located, and the degree of accuracy of image processing according to an embodiment of the present invention can be further improved.

Hereinabove, the processing for determining whether the generated grayscale histogram satisfies the second condition by the processing unit 830 has been explained. Hereinafter, processing performed by the processing unit 830 in a case where the second condition is satisfied will be explained. More specifically, as described above, according to an embodiment of the present invention, in a case where the processing unit 830 determines that there is a high-luminance target in the dark image based on the generated grayscale histogram of the current frame image, the depth map of the current frame image may be affected adversely, and it is necessary for the processing unit 830 to correct the depth map of the current frame image.

FIG. 5 is the flowchart illustrating the depth map correction processing according to the embodiment of the present invention. The specific processing of the depth map correction according to the embodiment of the present invention has been described above with reference to FIG. 5, and the correction processing performed by the processing unit 830 is similar to the above description, which will not be repeated here.

In addition, in some cases, the luminance of light that affects the depth in the image is gradually increasing. For example, when a vehicle comes closer from the distance, the illumination range becomes larger. When the vehicle is still distant, the image as a whole is dark. Even if there are some weak lights in the image, their influence on the depth map of the image may be acceptable without correction, and considering that the depths of the same object in two adjacent frames are the closest in most cases, it may be more desirable to save the depth map of such an image and use the depth map to correct depth maps of subsequent images that need to be corrected in consecutive frame images.

More specifically, according to another embodiment of the present invention, the processing unit 830 can determine whether the grayscale histogram satisfies the third condition after the second condition is determined to be satisfied, and the third condition is that a peak value exceeding a fourth threshold value is present in a particular section of the grayscale histogram of the current frame image, and the fourth threshold value is more than the third threshold value. When this third condition is satisfied, it means that the depth map of the current frame image will be significantly adversely affected by light, and the like. In this case, the processing unit 830 corrects the depth map of the current frame image, and outputs the corrected depth map. In a case where the third condition is not satisfied, the depth map of the current frame image is considered to be acceptable, and in this case, the processing unit 830 outputs the depth map of the current frame image.

After the processing unit 830 corrects the depth map of the current frame image, the processing unit 830 outputs the corrected depth map.

In summary, according to the flowchart illustrated in FIG. 1, firstly, the acquiring unit 810 acquires consecutive frame images, and the generating unit 820 generates a grayscale histogram. In a case where the processing unit 830 determines that the generated grayscale histogram does not satisfy the first condition or the second condition, the processing unit 830 outputs the depth map of the current frame image as it is. In this case, the depth map to be output is a depth map that does not need to be corrected. In a case where the processing unit 830 determines that the grayscale histogram generated satisfies the first condition and the second condition, the processing unit 830 corrects the depth map of the current frame image, and outputs the depth map corrected. In this case, the depth map to be output is a depth map that has been corrected. It should be understood that the depth map to be output may be saved, and the output depth maps include a directly output depth map and a corrected depth map so as to allow correction of depth maps in subsequent frame images of the consecutive frame images.

Hereinafter, an image processing apparatus 900 according to an embodiment of the present invention will be explained with reference to FIG. 9. FIG. 9 is a block diagram illustrating the image processing apparatus 900 according to the embodiment of the present invention. As illustrated in FIG. 9, the image processing apparatus 900 can be a computer or a server.

As illustrated in FIG. 9, the image processing apparatus 900 includes one or more processors 910 and a memory 920. It is to be understood that, in addition to the above-mentioned units, the image processing apparatus 900 may also include an input device, an output device (not illustrated), and the like. These units can be interconnected via a bus system and/or other forms of connection mechanism. It should be noted that the constituent elements and configurations of the image processing apparatus 900 illustrated in FIG. 9 are merely exemplary and not limiting, and the image processing apparatus 900 may also have other constituent elements and configurations as necessary.

The processor 910 may be a central processing unit (CPU) or other forms of processing units having data processing capabilities and/or instruction execution capabilities, and may utilize computer program instructions stored in the memory 920 to perform desired functions, which may include acquiring consecutive frame images, generating a depth map and a grayscale histogram of a current frame image of the consecutive frame images, outputting, in a case where the grayscale histogram of the current frame image does not satisfy a first condition, the depth map of the current frame image, determining, in a case where the grayscale histogram of the current frame image satisfies the first condition, whether the grayscale histogram of the current frame image satisfies a second condition, correcting, in a case where the grayscale histogram of the current frame image satisfies the second condition, the depth map of the current frame image, and outputting the corrected depth map of the current frame image.

The memory 920 may include one or more computer program products, which may include various forms of computer-readable storage media, such as a volatile memory and/or a non-volatile memory. One or more computer program instructions may be stored in a computer-readable storage medium, and the processor 910 may execute the program instructions to implement the functions of the image processing apparatus according to the embodiment of the present invention described above and/or other desired functions, and/or the image processing method according to the embodiment of the present invention. Various application programs and various data can also be stored in the computer-readable storage medium.

A computer-readable recording medium according to an embodiment of the present invention is recorded with instructions for causing, when executed by a computer, the computer to execute an image processing method, and the image processing method includes acquiring consecutive frame images, generating a depth map and a grayscale histogram of a current frame image of the consecutive frame images, outputting, in a case where the grayscale histogram of the current frame image does not satisfy a first condition, the depth map of the current frame image, determining, in a case where the grayscale histogram of the current frame image satisfies the first condition, whether the grayscale histogram of the current frame image satisfies a second condition, and correcting, in a case where the grayscale histogram of the current frame image satisfies the second condition, the depth map of the current frame image, and outputting the corrected depth map of the current frame image.

It should be understood that each constituent element in the image processing apparatus may be implemented by hardware, software, or a combination of hardware and software.

It is to be understood that the above-mentioned specific embodiments are merely exemplary and not limiting, and those skilled in the art may merge and combine some of the steps and constituent elements in the above-described embodiment according to the present invention to achieve the effect of the present invention. Such an embodiment made by merging and combining some of the steps and constituent elements are not described here, but are also included in the present invention.

Note that the advantages, effects, and the like described in the present invention are merely examples and the scope of the invention is defined by the appended claims.

The block diagrams of the members, apparatuses, equipment, and systems of the present invention are only illustrative examples and are not intended to require or imply that they must be connected, arranged, and configured in the manner illustrated in the block diagrams. As those skilled in the art would recognize, these members, apparatuses, equipment, and systems may be connected, arranged, and configured in any manner that is consistent with the invention as defined by the appended claims.

Various operations in the methods described above may be performed by any appropriate means capable of performing corresponding functions. The means may include various hardware and/or software components and/or modules, including but not limited to circuits, ASICs (Application Specific Integrated Circuits), or processors.

A general-purpose processor, a digital signal processor (DSP), an ASIC, a FPGA (Field Programmable Gate Array Signal), or other PLD (Programmable Logic Device), a discrete gate, a transistor logic, discrete hardware components, or any combination thereof designed to perform the functions described herein can implement or perform various logic blocks, modules, and circuits described herein. The general-purpose processor may be a microprocessor. The processor may be any commercially available processor, controller, microcontroller, or state machine. The processor may also be implemented as a combination of computing devices, such as a combination of a DSP and a microprocessor, multiple microprocessors, one or more microprocessors in cooperation with a DSP core, or any other such configuration.

The steps of the method or algorithm described in combination with the present invention may be directly embedded in hardware, a software module executed by a processor, or a combination of hardware and software. A software module may reside in any form of tangible storage medium. Some examples of storage media that can be used include a random access memory (RAM), a read-only memory (ROM), a flash memory, an EPROM memory, an EEPROM memory, a register, a hard disk, a removable disk, a CD-ROM, and the like. A storage medium may be coupled to the processor such that the processor can read information from the storage medium and write information to the storage medium. Alternatively, the storage medium may be integrated with the processor. A software module may include a single instruction or multiple instructions, and may be distributed over several different code segments, between different programs, and across multiple storage media.

The method of the invention includes one or more actions for implementing said method. The methods and/or actions may be interchanged with one another as long as they are not departing from the scope of the claims. In other words, unless a specific order of actions is specified, the order and/or execution of specific actions may be modified long as they are not departing from the scope of the claims.

The functions described may be implemented with hardware, software, firmware, or any combination thereof. If implemented with software, the functions may be stored as one or more instructions on a tangible computer-readable medium. A storage medium may be any available physical medium that can be accessed by a computer. By way of example and not limitation, such computer-readable media may include a RAM, a ROM, an EEPROM, a CD-ROM or other optical disks, disk storages, or other magnetic storage devices, or any other tangible media that are used to carry or store desired program codes in the form of instructions or data structures to allow access by a computer. As used herein, disks include compact disks (CDs), laser disks, optical disks, digital versatile disks (DVDs), floppy disks, and Blu-ray disks.

Therefore, a computer program product can perform the operations given herein. For example, such a computer program product may be a computer-readable tangible medium having instructions tangibly stored (and/or encoded) thereon, the instructions being executable by one or more processors to perform the operations described herein. The computer program product may include packaging materials.

Software or instructions may also be transmitted over a transmission medium. For example, software may be transmitted from a website, a server, or other remote sources using a transmission medium such as a coaxial cable, a fiber optic cable, a twisted pair, a digital subscriber line (DSL), or wireless techniques such as infrared, radio, or microwave communications.

In addition, modules and/or other suitable means for performing the methods and techniques described herein may be downloaded and/or otherwise obtained by a user terminal and/or a base station as appropriate. For example, such a device may be coupled to a server to facilitate the transfer of means for performing the methods described herein. Alternatively, various methods described herein may be provided as a storage medium (e.g., a physical storage medium such as a RAM, a ROM, a CD, or a floppy disk) so that the user terminal and/or the base station can be coupled to the device or various methods are acquired when the storage medium is provided to the device. Moreover, any other suitable techniques for providing the methods and techniques described herein to a device may be utilized.

The above description about the aspects of the present invention is provided to enable any person skilled in the art to make or use the invention. Various modifications to these aspects will be readily apparent to those skilled in the art, and the general principles defined herein may be applied to other aspects without departing from the scope of the invention which is defined by the appended claims. Therefore, the present invention should not be limited to the aspects described above, but the present invention includes the widest scope consistent with the appended claims.

The foregoing description has been given for the purposes of illustration and description whereas the limits of the present invention are to be determined on the basis of the definition of the invention by the appended claims.

**Claims**

1.  An image processing method (100) comprising:

    acquiring consecutive frame images;
    generating a depth map of a current frame image of the consecutive frame images and a grayscale histogram of the current frame image of the consecutive frame images;
    determining whether the grayscale histogram of the current frame image satisfies a first condition, the current frame image being classified as a dark image if the first condition is satisfied;
    outputting, in a case where it has been determined that the grayscale histogram of the current frame image does not satisfy the first condition, the depth map of the current frame image;
    determining, in a case where it has been determined that the grayscale histogram of the current frame image satisfies the first condition, whether the grayscale histogram of the current frame image satisfies a second condition, the current frame image being classified as an image affected by strong light if the second condition is satisfied;
    outputting, in a case where it has been determined that the grayscale histogram of the current frame image does not satisfy the second condition, the depth map of the current frame image; and
    correcting, in a case where the grayscale histogram of the current frame image satisfies the second condition, the depth map of the current frame image, and outputting the corrected depth map of the current frame image, wherein the depth map is corrected by:

      identifying at least one target region in the current frame image; and
      substituting corrected depth values in the at least one target region.

2.  The image processing method (100) according to claim 1, wherein the first condition is that a representative grayscale value of the grayscale histogram is less than a first threshold value.

3.  The image processing method (100) according to claim 1, wherein the second condition is that, in a grayscale section in which each grayscale value is more than a second threshold value in the generated grayscale histogram, a difference in number of pixels for adjacent grayscale values is more than a third threshold value.

4. The image processing method (100) according to claim 1, wherein the correcting of the depth map of the current frame image further comprises:

identifying at least one first target in the current frame image;
calculating a degree of accuracy of a depth value of one or more pixels related to the at least one first target;
comparing the degree of accuracy of the depth value of the one or more pixels related to the at least one first target with a threshold value of the degree of accuracy; and
correcting, in a case where the one or more pixels related to the at least one first target includes at least one first pixel of which degree of accuracy of the depth value is less than the threshold value of the degree of accuracy, the depth value of the at least one first pixel.

5. The image processing method (100) according to claim 4, wherein the calculating of the degree of accuracy of the depth value of the one or more pixels related to the first target further comprises:

determining, in a previous frame image, at least one second target corresponding to the at least one first target;
calculating, as the degree of accuracy of the depth value of the one or more pixels related to the at least one first target, a difference between the depth value of the one or more pixels related to the at least one first target and a depth value of one or more pixels corresponding to the at least one second target.

6. The image processing method (100) according to claim 4 or 5, wherein the correcting of the depth value of the at least one first pixel further comprises:

correcting the depth value of the first pixel, based on a depth value of a pixel, related to the at least one first target, of which a degree of accuracy of the depth value is equal to or more than the threshold value of the degree of accuracy; or
correcting the depth value of the first pixel, based on a depth value of a pixel related to at least one second target corresponding to the at least one first target in a previous frame image.

7. The image processing method (100) according to claim 1, wherein the depth map of the current frame image is generated based on a deep neural network.

8. The image processing method (100) according to claim 2, further comprising a step of determining the representative grayscale value,
wherein determining the representative grayscale value comprises either:

(i) determining an average grayscale value of the grayscale histogram; or
(ii) evaluating the representative grayscale value by counting the number of pixels in a predetermined section of the grayscale histogram.

9. An image processing apparatus (800) comprising:

an acquiring unit (810) configured to acquire consecutive frame images;
a generating unit (820) configured to generate a depth map of a current frame image of the consecutive frame images and a grayscale histogram of the current frame image of the consecutive frame images; and
a processing unit (830) configured to determine whether the grayscale histogram of the current frame image satisfies a first condition, the current frame image being classified as a dark image if the first condition is satisfied,
wherein in a case where it has been determined that the grayscale histogram of the current frame image does not satisfy the first condition, the processing unit outputs the depth map of the current frame image,
in a case where it has been determined that the grayscale histogram of the current frame image satisfies the first condition, the processing unit determines whether the grayscale histogram of the current frame image satisfies a second condition, the current frame image being classified as an image affected by strong light if the second condition is satisfied,
in a case where it has been determined that the grayscale histogram of the current frame image does not satisfy the second condition, the processing unit outputs the depth map of the current frame image; and
in a case where the grayscale histogram of the current frame image satisfies the second condition, the processing unit corrects the depth map of the current frame image, and outputs the corrected depth map of the current frame image,
wherein the depth map is corrected by:

identifying at least one target region in the current frame image; and
substituting corrected depth values in the at least one target region.

10. A computer-readable recording medium recorded with instructions for causing, when executed by a computer, the computer to execute an image processing method (100),
the image processing method comprising:

acquiring consecutive frame images;
generating a depth map of a current frame image of the consecutive frame images and a grayscale histogram of the current frame image of the consecutive frame images;
determining whether the grayscale histogram of the current frame image satisfies a first condition, the current frame image being classified as a dark image if the first condition is satisfied;
outputting, in a case where it has been determined that the grayscale histogram of the current frame image does not satisfy the first condition, the depth map of the current frame image;
determining, in a case where it has been determined that the grayscale histogram of the current frame image satisfies the first condition, whether the grayscale histogram of the current frame image satisfies a second condition, the current frame image being classified as an image affected by strong light if the second condition is satisfied;
outputting, in a case where it has been determined that the grayscale histogram of the current frame image does not satisfy the second condition, the depth map of the current frame image; and
correcting, in a case where the grayscale histogram of the current frame image satisfies the second condition, the depth map of the current frame image, and outputting the corrected depth map of the current frame image, wherein the depth map is corrected by:

identifying at least one target region in the current frame image; and
substituting corrected depth values in the at least one target region.

**Patentansprüche**

1. Bildverarbeitungsverfahren (100), umfassend:

Erfassen von aufeinanderfolgenden Einzelbildern;
Erzeugen einer Tiefenkarte eines gegenwärtigen Einzelbilds der aufeinanderfolgenden Einzelbilder und eines Graustufenhistogramms des gegenwärtigen Einzelbilds der aufeinanderfolgenden Einzelbilder;
Bestimmen, ob das Graustufenhistogramm des gegenwärtigen Einzelbilds eine erste Bedingung erfüllt, wobei das gegenwärtige Einzelbild als ein dunkles Bild klassifiziert wird, wenn die erste Bedingung erfüllt ist;
Ausgeben, in einem Fall, in dem bestimmt wurde, dass das Graustufenhistogramm des gegenwärtigen Einzelbilds die erste Bedingung nicht erfüllt, der Tiefenkarte des gegenwärtigen Einzelbilds;
Bestimmen, in einem Fall, in dem bestimmt wurde, dass das Graustufenhistogramm des gegenwärtigen Einzelbilds die erste Bedingung erfüllt, ob das Graustufenhistogramm des gegenwärtigen Einzelbilds eine zweite Bedingung erfüllt, wobei das gegenwärtige Einzelbild als ein von starkem Licht beeinflusstes Bild klassifiziert wird, wenn die zweite Bedingung erfüllt ist;
Ausgeben, in einem Fall, in dem bestimmt wurde, dass das Graustufenhistogramm des gegenwärtigen Einzelbilds die zweite Bedingung nicht erfüllt, der Tiefenkarte des gegenwärtigen Einzelbilds; und
Korrigieren, in einem Fall, in dem das Graustufenhistogramm des gegenwärtigen Einzelbilds die zweite Bedingung erfüllt, der Tiefenkarte des gegenwärtigen Einzelbilds und Ausgeben der korrigierten Tiefenkarte des gegenwärtigen Einzelbilds,
wobei die Tiefenkarte korrigiert wird durch:

Identifizieren mindestens einer Zielregion in dem gegenwärtigen Einzelbild; und
Ersetzen von korrigierten Tiefenwerten in der mindestens einen Zielregion.

2. Bildverarbeitungsverfahren (100) nach Anspruch 1, wobei die erste Bedingung ist, dass ein repräsentativer Graustufenwert des Graustufenhistogramms kleiner als ein erster Schwellenwert ist.

**3.** Bildverarbeitungsverfahren (100) nach Anspruch 1, wobei die zweite Bedingung ist, dass in einem Graustufenabschnitt, in dem jeder Graustufenwert größer als ein zweiter Schwellenwert in dem erzeugten Graustufenhistogramm ist, eine Differenz in der Anzahl der Bildpunkte für benachbarte Graustufenwerte größer als ein dritter Schwellenwert ist.

**4.** Bildverarbeitungsverfahren (100) nach Anspruch 1, wobei das Korrigieren der Tiefenkarte des gegenwärtigen Einzelbildes ferner umfasst:

Identifizieren mindestens eines ersten Ziels in dem gegenwärtigen Einzelbild;
Berechnen eines Genauigkeitsgrads eines Tiefenwerts von einem oder mehreren Bildpunkten, die mit dem mindestens einen ersten Ziel in Beziehung stehen;
Vergleichen des Genauigkeitsgrads des Tiefenwerts des einen oder der mehreren Bildpunkte, die mit dem mindestens einen ersten Ziel in Beziehung stehen, mit einem Schwellenwert des Genauigkeitsgrads; und
Korrigieren, in dem Fall, in dem der eine oder die mehreren Bildpunkte, die mit dem mindestens einen ersten Ziel in Beziehung stehen, mindestens einen ersten Bildpunkt enthalten, dessen Genauigkeitsgrad des Tiefenwerts kleiner als der Schwellenwert des Genauigkeitsgrads ist, des Tiefenwerts des mindestens einen ersten Bildpunkts.

**5.** Bildverarbeitungsverfahren (100) nach Anspruch 4, wobei das Berechnen des Genauigkeitsgrads des Tiefenwerts des einen oder der mehreren Bildpunkte, die mit dem ersten Ziel in Beziehung stehen, ferner umfasst:

Bestimmen, in einem vorherigen Einzelbild, mindestens eines zweiten Ziels, das dem mindestens einen ersten Ziel entspricht;
Berechnen, als den Genauigkeitsgrad des Tiefenwerts des einen oder der mehreren Bildpunkte, die mit dem mindestens einen ersten Ziel in Beziehung stehen, einer Differenz zwischen dem Tiefenwert des einen oder der mehreren Bildpunkte, die mit dem mindestens einen ersten Ziel in Beziehung stehen, und eines Tiefenwerts eines oder mehrerer Bildpunkte, die dem mindestens einen zweiten Ziel entsprechen.

**6.** Bildverarbeitungsverfahren (100) nach Anspruch 4 oder 5, wobei das Korrigieren des Tiefenwerts des mindestens einen ersten Bildpunkts ferner umfasst:

Korrigieren des Tiefenwerts des ersten Bildpunkts basierend auf einem Tiefenwert eines Bildpunkts, der mit dem mindestens einen ersten Ziel in Beziehung steht, von dem ein Genauigkeitsgrad des Tiefenwerts gleich oder größer als der Schwellenwert des Genauigkeitsgrads ist; oder
Korrigieren des Tiefenwerts des ersten Bildpunktes basierend auf einem Tiefenwert eines Bildpunktes, der mit dem mindestens einen zweiten Ziel in Beziehung steht, das dem dem mindestens einen ersten Ziel in einem vorherigen Einzelbild entspricht.

**7.** Bildverarbeitungsverfahren (100) nach Anspruch 1, wobei die Tiefenkarte des gegenwärtigen Einzelbilds basierend auf einem tiefen neuronalen Netzwerk erzeugt wird.

**8.** Bildverarbeitungsverfahren (100) nach Anspruch 2, ferner umfassend einen Schritt des Bestimmens des repräsentativen Graustufenwerts,
wobei das Bestimmen des repräsentativen Graustufenwerts entweder umfasst:

(i) Bestimmen eines durchschnittlichen Graustufenwerts des Graustufenhistogramms; oder
(ii) Auswerten des repräsentativen Graustufenwerts durch Zählen der Anzahl von Bildpunkten in einem vorbestimmten Abschnitt des Graustufenhistogramms.

**9.** Bildverarbeitungsvorrichtung (800), umfassend:

eine Erfassungseinheit (810), konfiguriert zum Erfassen aufeinanderfolgender Einzelbilder;
eine Erzeugungseinheit (820), konfiguriert zum Erzeugen einer Tiefenkarte eines gegenwärtigen Einzelbilds der aufeinanderfolgenden Einzelbilder und eines Graustufenhistogramms des gegenwärtigen Einzelbilds der aufeinanderfolgenden Einzelbilder; und
eine Verarbeitungseinheit (830), konfiguriert zum Bestimmen, ob das Graustufenhistogramm des gegenwärtigen Einzelbilds eine erste Bedingung erfüllt, wobei das gegenwärtige Einzelbild als ein dunkles Bild klassifiziert wird, wenn die erste Bedingung erfüllt ist,

wobei in einem Fall, in dem bestimmt wurde, dass das Graustufenhistogramm des gegenwärtigen Einzelbilds die erste Bedingung nicht erfüllt, die Verarbeitungseinheit die Tiefenkarte des gegenwärtigen Einzelbilds ausgibt, wobei in einem Fall, in dem bestimmt wurde, dass das Graustufenhistogramm des gegenwärtigen Einzelbilds die erste Bedingung erfüllt, die Verarbeitungseinheit bestimmt, ob das Graustufenhistogramm des gegenwärtigen Einzelbilds eine zweite Bedingung erfüllt, wobei das gegenwärtige Einzelbild als ein von starkem Licht beeinflusstes Bild klassifiziert wird, wenn die zweite Bedingung erfüllt ist, wobei in einem Fall, in dem bestimmt wurde, dass das Graustufenhistogramm des gegenwärtigen Einzelbilds die zweite Bedingung nicht erfüllt, die Verarbeitungseinheit die Tiefenkarte des gegenwärtigen Einzelbilds ausgibt; und wobei in einem Fall, in dem das Graustufenhistogramm des gegenwärtigen Einzelbilds die zweite Bedingung erfüllt, die Verarbeitungseinheit die Tiefenkarte des gegenwärtigen Einzelbilds korrigiert und die korrigierte Tiefenkarte des gegenwärtigen Einzelbilds ausgibt, wobei die Tiefenkarte korrigiert wird durch:

Identifizieren mindestens einer Zielregion in dem gegenwärtigen Einzelbild; und
Ersetzen von korrigierten Tiefenwerten in der mindestens einen Zielregion.

10. Computerlesbares Aufzeichnungsmedium, auf dem Anweisungen aufgezeichnet sind zum Veranlassen, wenn sie durch einen Computer ausgeführt werden, dass der Computer ein Bildverarbeitungsverfahren (100) ausführt, das Bildverarbeitungsverfahren umfassend:

Erfassen von aufeinanderfolgenden Einzelbildern;
Erzeugen einer Tiefenkarte eines gegenwärtigen Einzelbilds der aufeinanderfolgenden Einzelbilder und eines Graustufenhistogramms des gegenwärtigen Einzelbilds der aufeinanderfolgenden Einzelbilder;
Bestimmen, ob das Graustufenhistogramm des gegenwärtigen Einzelbilds eine erste Bedingung erfüllt, wobei das gegenwärtige Einzelbild als ein dunkles Bild klassifiziert wird, wenn die erste Bedingung erfüllt ist;
Ausgeben, in einem Fall, in dem bestimmt wurde, dass das Graustufenhistogramm des gegenwärtigen Einzelbilds die erste Bedingung nicht erfüllt, der Tiefenkarte des gegenwärtigen Einzelbilds;
Bestimmen, in einem Fall, in dem bestimmt wurde, dass das Graustufenhistogramm des gegenwärtigen Einzelbilds die erste Bedingung erfüllt, ob das Graustufenhistogramm des gegenwärtigen Einzelbilds eine zweite Bedingung erfüllt, wobei das gegenwärtige Einzelbild als ein von starkem Licht beeinflusstes Bild klassifiziert wird, wenn die zweite Bedingung erfüllt ist;
Ausgeben, in einem Fall, in dem bestimmt wurde, dass das Graustufenhistogramm des gegenwärtigen Einzelbilds die zweite Bedingung nicht erfüllt, der Tiefenkarte des gegenwärtigen Einzelbilds; und
Korrigieren, in einem Fall, in dem das Graustufenhistogramm des gegenwärtigen Einzelbilds die zweite Bedingung erfüllt, der Tiefenkarte des gegenwärtigen Einzelbilds und Ausgeben der korrigierten Tiefenkarte des gegenwärtigen Einzelbilds,
wobei die Tiefenkarte korrigiert wird durch:

Identifizieren mindestens einer Zielregion in dem gegenwärtigen Einzelbild; und
Ersetzen von korrigierten Tiefenwerten in der mindestens einen Zielregion.

**Revendications**

1. Procédé de traitement d'image (100) comprenant:

l'acquisition d'images consécutives de trame;
la génération d'une carte de profondeur d'une image courante de trame des images consécutives de trame et d'un histogramme en niveau de gris de l'image courante de trame des images consécutives de trame;
la détermination si l'histogramme en niveau de gris de l'image courante de trame satisfait une première condition, l'image courante de trame étant classée comme une image sombre si la première condition est satisfaite;
l'émission en sortie, dans un cas où il a été déterminé que l'histogramme en niveau de gris de l'image courante de trame ne satisfait pas la première condition, de la carte de profondeur de l'image courante de trame;
la détermination, dans un cas où il a été déterminé que l'histogramme en niveau de gris de l'image courante de trame satisfait la première condition, si l'histogramme en niveau de gris de l'image courante de trame satisfait une seconde condition, l'image courante de trame étant classée comme une image affectée par une lumière forte si la seconde condition est satisfaite;
l'émission en sortie, dans un cas où il a été déterminé que l'histogramme en niveau de gris de l'image courante de trame ne satisfait pas la seconde condition, de la carte de profondeur de l'image courante de trame; et la correction, dans un cas où l'histogramme en niveau de gris de l'image courante de trame satisfait la seconde condition, de la carte de profondeur de l'image courante de trame, et l'émission en sortie de la carte de profondeur corrigée de l'image courante de trame,

dans lequel la carte de profondeur est corrigée par:

l'identification d'au moins une région cible dans l'image courante de trame; et
la substitution des valeurs de profondeur corrigées dans l'au moins une région cible.

2. Procédé de traitement d'image (100) selon la revendication 1, dans lequel la première condition est qu'une valeur en niveau de gris représentative de l'histogramme en niveau de gris est inférieure à une première valeur seuil.

3. Procédé de traitement d'image (100) selon la revendication 1, dans lequel la seconde condition est que, dans une section de niveau de gris dans laquelle chaque valeur en niveau de gris est supérieure à une seconde valeur seuil dans l'histogramme en niveau de gris généré, une différence en nombre de pixels pour des valeurs en niveau de gris adjacentes est supérieure à une troisième valeur seuil.

4. Procédé de traitement d'image (100) selon la revendication 1, dans lequel la correction de la carte de profondeur de l'image courante de trame comprend en outre:

l'identification d'au moins une première cible dans l'image courante de trame;
le calcul d'un degré d'exactitude d'une valeur de profondeur d'un ou plusieurs pixels liés à l'au moins une première cible;
la comparaison du degré d'exactitude de la valeur de profondeur des un ou plusieurs pixels liés à l'au moins une première cible à une valeur seuil du degré d'exactitude; et
la correction, dans un cas où les un ou plusieurs pixels liés à l'au moins une première cible incluent au moins un premier pixel dont le degré d'exactitude de la valeur de profondeur est inférieur à la valeur seuil du degré d'exactitude, de la valeur de profondeur de l'au moins un premier pixel.

5. Procédé de traitement d'image (100) selon la revendication 4, dans lequel le calcul du degré d'exactitude de la valeur de profondeur des un ou plusieurs pixels liés à la première cible comprend en outre:

la détermination, dans une image précédente de trame, d'au moins une seconde cible correspondant à l'au moins une première cible;
le calcul, en tant que degré d'exactitude de la valeur de profondeur des un ou plusieurs pixels liés à l'au moins une première cible, d'une différence entre la valeur de profondeur des un ou plusieurs pixels liés à l'au moins une première cible et d'une valeur de profondeur des un ou plusieurs pixels correspondant à l'au moins une seconde cible.

6. Procédé de traitement d'image (100) selon la revendication 4 ou 5, dans lequel la correction de la valeur de profondeur de l'au moins un premier pixel comprend en outre:

la correction de la valeur de profondeur du premier pixel, sur la base d'une valeur de profondeur d'un pixel, lié à l'au moins une première cible, dont un degré d'exactitude de la valeur de profondeur est supérieur ou égal à la valeur seuil du degré d'exactitude; ou
la correction de la valeur de profondeur du premier pixel, sur la base d'une valeur de profondeur d'un pixel lié à au moins une seconde cible correspondant à l'au moins une première cible dans une image précédente de trame.

7. Procédé de traitement d'image (100) selon la revendication 1, dans lequel la carte de profondeur de l'image courante de trame est générée sur la base d'un réseau de neurones profond.

8. Procédé de traitement d'image (100) selon la revendication 2, comprenant en outre une étape de détermination de la valeur en niveau de gris représentative,
dans lequel la détermination de la valeur en niveau de gris représentative comprend soit:

(i) la détermination d'une valeur en niveau de gris moyenne de l'histogramme en niveau de gris; soit
(ii) l'évaluation de la valeur en niveau de gris représentative en comptant le nombre de pixels dans une section prédéterminée de l'histogramme en niveau de gris.

9. Appareil de traitement d'image (800) comprenant:

une unité d'acquisition (810) configurée pour acquérir des images consécutives de trame;
une unité de génération (820) configurée pour générer une carte de profondeur d'une image courante de trame des images consécutives de trame et un histogramme en niveau de gris de l'image courante de trame des images consécutives de trame; et
une unité de traitement (830) configurée pour déterminer si l'histogramme en niveau de gris de l'image courante de trame satisfait une première condition, l'image courante de trame étant classée comme une image sombre si la première condition est satisfaite,
dans lequel dans un cas où il a été déterminé que l'histogramme en niveau de gris de l'image courante de trame ne satisfait pas la première condition, l'unité de traitement émet en sortie la carte de profondeur de l'image courante de trame,
dans un cas où il a été déterminé que l'histogramme en niveau de gris de l'image courante de trame satisfait la première condition, l'unité de traitement détermine si l'histogramme en niveau de gris de l'image courante de trame satisfait une seconde condition, l'image courante de trame étant classée comme une image affectée par une lumière forte si la seconde condition est satisfaite,
dans un cas où il a été déterminé que l'histogramme en niveau de gris de l'image courante de trame ne satisfait pas la seconde condition, l'unité de traitement émet en sortie la carte de profondeur de l'image courante de trame; et
dans un cas où l'histogramme en niveau de gris de l'image courante de trame satisfait la seconde condition, l'unité de traitement corrige la carte de profondeur de l'image courante de trame, et émet en sortie la carte de profondeur corrigée de l'image courante de trame,
dans lequel la carte de profondeurs est corrigée en:

identifiant au moins une région cible dans l'image courante de trame; et
substituant des valeurs de profondeur corrigées dans l'au moins une région cible.

10. Support d'enregistrement lisible par ordinateur enregistré avec des instructions pour amener, lorsqu'exécutées par un ordinateur, l'ordinateur à exécuter un procédé de traitement d'image (100),
le procédé de traitement d'image comprenant:

l'acquisition d'images consécutives de trame;
la génération d'une carte de profondeur d'une image courante de trame des images consécutives de trame et d'un histogramme en niveau de gris de l'image courante de trame des images consécutives de trame;
la détermination si l'histogramme en niveau de gris de l'image courante de trame satisfait une première condition, l'image courante de trame étant classée comme une image sombre si la première condition est satisfaite;
l'émission en sortie, dans un cas où il a été déterminé que l'histogramme en niveau de gris de l'image courante de trame ne satisfait pas la première condition, de la carte de profondeur de l'image courante de trame;
la détermination, dans un cas où il a été déterminé que l'histogramme en niveau de gris de l'image courante de trame satisfait la première condition, si l'histogramme en niveau de gris de l'image courante de trame satisfait une seconde condition, l'image courante de trame étant classée comme une image affectée par une lumière forte si la seconde condition est satisfaite;
l'émission en sortie, dans un cas où il a été déterminé que l'histogramme en niveau de gris de l'image courante de trame ne satisfait pas la seconde condition, de la carte de profondeur de l'image courante de trame; et
la correction, dans un cas où l'histogramme en niveau de gris de l'image courante de trame satisfait la seconde condition, de la carte de profondeur de l'image courante de trame, et l'émission en sortie de la carte de profondeur corrigée de l'image courante de trame,
dans lequel la carte de profondeur est corrigée en:

identifiant au moins une région cible dans l'image courante de trame; et
substituant des valeurs de profondeur corrigées dans l'au moins une région cible.

# FIG.1

100

```
         ┌─────────────────┐ S101
         │    ACQUIRE      │
         │  CONSECUTIVE    │
         │  FRAME IMAGES   │
         └─────────────────┘
                 │
                 ▼
    ┌──────────────────────────┐ S102
    │ GENERATE DEPTH MAP AND   │
    │  GRAYSCALE HISTOGRAM     │
    │ OF CURRENT FRAME IMAGE   │
    └──────────────────────────┘
                 │
                 ▼
           ◇ S103
         MAKE
     DETERMINATION        NO
      AS TO FIRST  ─────────────────┐
       CONDITION                    │
           │                        │
          YES                       │
           │                        │
           ▼                        │
           ◇ S104                   │
         MAKE                       │
     DETERMINATION        NO        │
     AS TO SECOND ─────────────────►│
       CONDITION                    │
           │                        │
          YES                       │
           │                        │
           ▼                        │
    ┌─────────────────┐ S105        │
    │ CORRECT DEPTH   │             │
    │ MAP OF CURRENT  │             │
    │  FRAME IMAGE    │             │
    └─────────────────┘             │
           │                        │
           ▼                        ▼
   ┌─────────────────┐ S106   ┌─────────────────┐ S106'
   │ OUTPUT CORRECTED│        │    DIRECTLY     │
   │   DEPTH MAP     │        │ OUTPUT DEPTH MAP│
   └─────────────────┘        └─────────────────┘
```

## FIG.2

BLACK
REGION

SHADOW
REGION

EXPOSURE
REGION

HIGHLIGHT
REGION

WHITE
REGION

PURE
BLACK

PURE
WHITE

## FIG.3A

## FIG.3B

# FIG.4

# FIG.5

500

| IDENTIFY AT LEAST ONE FIRST TARGET IN CURRENT FRAME IMAGE | S501 |

| CALCULATE THE DEGREES OF ACCURACIES OF DEPTH VALUES OF PIXELS RELATED TO THE AT LEAST ONE FIRST TARGET | S502 |

| COMPARE THE DEGREES OF ACCURACIES OF DEPTH VALUES OF PIXELS RELATED TO THE AT LEAST ONE FIRST TARGET WITH THRESHOLD VALUE OF THE DEGREE OF ACCURACY | S503 |

| WHERE PIXELS RELATED TO THE AT LEAST ONE FIRST TARGET ARE DETERMINED TO INCLUDE AT LEAST ONE FIRST PIXEL OF WHICH DEGREE OF ACCURACY OF DEPTH VALUE IS LESS THAN THRESHOLD VALUE OF THE DEGREE OF ACCURACY, CORRECT DEPTH VALUE OF THE AT LEAST ONE FIRST PIXEL | S504 |

EP 3 712 841 B1

# FIG.6

FIRST TARGET

Sky | Building | Pole | Road Marking | Road | Pavement | Tree | Sign Symbol | Fence | Vehicle | Pedestrian | Bike

# FIG.7

23

# FIG.8

IMAGE PROCESSING APPARATUS ~800

ACQUIRING UNIT ~810

GENERATING UNIT ~820

PROCESSING UNIT ~830

# FIG.9

IMAGE PROCESSING APPARATUS ~900

PROCESSOR ~910

MEMORY ~920

**EP 3 712 841 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2004190789 A1

### Non-patent literature cited in the description

- Depthmap plugin - elsamuko. *Wayback Machine of the Internet Archive,* 23 June 2015